# FASCICULE DE BREVET EUROPEEN

(11) **EP 4 041 600 B1**
(45) Date de publication et mention de la délivrance du brevet: **12.03.2025**
(21) Numéro de dépôt: 20775001.9
(22) Date de dépôt: 24.09.2020
(51) Int. Cl.: B60Q 11/00, B60Q 1/14, H05B 45/00, H05B 45/10, G01M 11/06, H05B 45/44

(54) **DISPOSITIF ET PROCEDE DE COMMANDE DE SOURCES LUMINEUSES MATRICIELLES**
VORRICHTUNG UND VERFAHREN ZUR STEUERUNG VON MATRIXLICHTQUELLEN
DEVICE AND METHOD FOR CONTROLLING MATRIX LIGHT SOURCES

(30) Priorité: 27.09.2019 FR 1910733
(43) Date de publication de la demande: 17.08.2022
(73) Titulaire: Valeo Vision, 93012 Bobigny Cedex (FR)
(72) Inventeur: VOIRIN, Patrice, 93012 BOBIGNY Cedex (FR); YANG, Feng, 93012 BOBIGNY Cedex (FR); DONNAT, Eric, 93012 BOBIGNY Cedex (FR); KOUKI, Houssem, 93012 BOBIGNY Cedex (FR); CARBONELL, Rodrigo, 93012 BOBIGNY Cedex (FR)
(74) Mandataire: Valeo Visibility
(86) Numéro de dépôt international: PCT/EP2020/076636
(87) Numéro de publication internationale: WO 2021/058608

(56) Documents cités:
- EP-A1- 3 287 986
- EP-A1- 3 501 895
- EP-B1- 2 676 527
- DE-A1- 102010 031 242
- DE-A1- 102014 015 796
- DE-A1- 102015 016 375
- DE-A1- 102015 120 204
- DE-U1- 202019 100 543
- FR-A1- 3 055 980
- FR-A1- 3 072 531
- US-A1- 2006 193 133
- US-A1- 2019 128 497
- US-A1- 2019 200 427
- US-A1- 2019 268 071

## Description

L'invention se rapporte aux modules d'éclairage pour véhicules automobiles. En particulier, l'invention se rapporte à de tels modules impliquant des sources lumineuses matricielles.

Une diode électroluminescente, LED, est un composant électronique semi-conducteur capable d'émettre de la lumière lorsqu'il est parcouru par un courant électrique ayant au moins une intensité seuil. Dans le domaine automobile, on a de plus en plus recours à la technologie LED pour diverses solutions de signalisation lumineuse. Des matrices de LED sont particulièrement intéressantes dans le domaine de l'éclairage automobile. Des sources lumineuses matricielles peuvent être utilisées pour des fonctions de type « levelling », i.e., ajustement de la hauteur du faisceau lumineux émis, en fonction de l'assiette du véhicule et du profil de la route. D'autres applications comprennent le DBL (« Digital Bending Light ») ce qui correspond à l'ajustement de la direction du faisceau lumineux émis, pour suivre la route dans le plan horizontal, l'ADB (« Adaptive Driving Beam ») qui correspond à une fonction anti-éblouissement qui génère des zones d'ombre dans le faisceau lumineux émis par un feu de route pour ne pas gêner d'autres usagers de la route, mais aussi des fonctions de projection de motifs au sol utilisant le faisceau lumineux pixelisé.

Il est connu d'utiliser des sources lumineuses de différents types de technologies pour les applications d'éclairage citées. Il s'agit par exemple de la technologie monolithique, suivant laquelle une pluralité importante de sources élémentaires de type LED, équivalentes à des pixels, sont gravées dans un substrat semi-conducteur commun. Des connexions électriques intégrées permettent d'activer les pixels indépendamment les uns des autres. Une autre technologie connue est celle des microLED, qui engendre une matrice de LEDs de faibles dimensions, typiquement inférieures à 150µm. Il existe aussi des modules de type à micro-miroirs, DMD (« Digital Micro-Mirror Device »), qui impliquent une technologie de projection utilisant un modulateur d'intensité sur un faisceau uniforme. Des micro-miroirs, dont la position est commandée moyennant des éléments piézo-électriques, sont orientés de manière à réfléchir sélectivement un faisceau lumineux incident, de manière à ce que chaque micro-miroir corresponde à une source élémentaire de la matrice de pixels ainsi générée. La lumière issue d'une source est dirigée sur la matrice de micro-miroirs par une optique. Cette lumière a donc une distribution variable d'un module à l'autre, à cause du positionnement et des tolérances de fabrication de l'optique et de la source de lumière. Ceci engendre une intensité maximale variable d'un module à l'autre, pour un pixel donné. Dans ce cas chaque pixel aura une intensité maximale différente en fonction de la commande qui lui est transmise. De tels dispositifs d'éclairage sont conçus par des méthodes de production de masse. Il existe obligatoirement un jeu entre les éléments constitutifs du dispositif d'éclairage et/ou de signalisation d'une part pour permettre un assemblage aisé, et d'autre part parce que les pièces ne sont généralement pas usinées mais plutôt moulées en plastique, ce qui permet de réduire le coût de production.

Il faut souligner, en particulier, la difficulté à aligner parfaitement une matrice à micro-miroirs avec la partie optique de projection, qui comprend généralement au moins une lentille. Du fait de la grande ouverture numérique de l'objectif utilisé pour la fonction de projection, la qualité de projection de l'image se dégrade significativement dès que le décalage latéral de l'axe optique atteint quelques micromètres. En pratique des déformations de l'image projetée sont donc inévitables en utilisant des solutions connues dans l'art. Chaque module de projection de ce type a un jeu de caractéristiques optiques qui lui est propre, notamment des caractéristiques d'aberrations géométriques, dont des propriétés de distorsion optique et d'aberration sphérique. Lors de la production de micro-miroirs, des aberrations géométriques peuvent être introduites. Tous ces éléments résultent dans un comportement non-homogène de la source lumineuse matricielle.

Tous ces modules précités ont des caractéristiques propres liées à la combinaison des tolérances de fabrication des composants. Lors de la production de composants semi-conducteurs tels que des LEDs ou des matrices de LEDs, des variations de de courant direct sont à ce jour inévitables. Il s'ensuit que dans une matrice de LEDs donnée, à courant de charge égale, les LEDs émettent des faisceaux lumineux d'intensités variables, non-homogènes.

Les documents FR3072531 A1 et FR3055980 A1 montrent qu'il est connu de stocker des données de calibration dans un module d'éclairage.

L'invention a pour objectif de pallier à au moins un des problèmes posés par l'art antérieur. Plus précisément, l'invention a pour objectif de proposer un module d'éclairage ainsi qu'un procédé de commande qui permettent de calibrer le comportement lumineux et/ou géométrique des sources lumineuses élémentaires regroupées dans une source lumineuse matricielle d'un véhicule automobile. Le but est de se donner les moyens produire un faisceau lumineux homogène et conforme à une consigne prédéterminée, indépendamment de l'instance de la source lumineuse matricielle implantée dans le module d'éclairage.

Selon un premier aspect de l'invention tel que défini dans la revendication 1, un module d'éclairage pour un véhicule automobile est proposé. Le module d'éclairage comprend une source lumineuse matricielle regroupant une pluralité de sources lumineuses élémentaires, une unité de réception de données pour recevoir une consigne d'éclairage, et une unité de commande destinée à commander ladite source lumineuse matricielle en fonction de ladite consigne d'éclairage. Le module d'éclairage comprend un élément de mémoire auquel l'unité de commande a un accès en lecture, et dans lequel des données de calibration propres à chacune des sources lumineuses élémentaires sont enregistrées.

L'unité de réception peut de préférence comprendre une interface réseau capable de recevoir des données sur un bus de données interne au véhicule automobile. Par exemple, le bus peut être un bus Ethernet, un bus de type Gigabit Multimedia Serial Link, GMSL, ou un bus de technologie Low Voltage Differential Signaling, LVDS, comme un bus FPD-Link III.

L'unité de commande peut de préférence comprendre un élément microcontrôleur. L'unité de commande peut préférentiellement comprendre une puce de type « Field Programmable Gate Array », FPGA, « Application Specific Integrated Circuit », ASIC, ou « Complex Programmable Logic Device », CPLD. Ces éléments sont configurés moyennant un programme informatique approprié pour mettre en œuvre les fonctionnalités décrites.

La source lumineuse matricielle peut de préférence comprendre une source monolithique, comprenant des sources lumineuses élémentaires électroluminescentes à éléments semi-conducteurs gravées dans un substrat commun et activables indépendamment les unes des autres.

La source lumineuse matricielle peut de préférence comprendre une matrice de type micro LED, comprenant une matrice de sources élémentaires réalisées par des diodes électroluminescentes, LED, de faibles dimensions, typiquement inférieures à 150 µm.

La source lumineuse matricielle peut de préférence comprendre un dispositif à micro-miroirs, DMD, (« Digital micromirror device »), dans lequel une source élémentaire comprend un micro-miroir d'une matrice, qui réfléchit de manière sélective en fonction de sa position un faisceau de lumière incident.

De préférence, ladite consigne d'éclairage peut comprendre une consigne élémentaire par source lumineuse élémentaire.

Ladite consigne d'éclairage peut préférentiellement comprendre une image. De préférence, au moins un pixel de l'image peut correspondre à une source lumineuse élémentaire. La résolution de l'image peut de préférence être supérieure à la résolution de projection de la source lumineuse matricielle. De préférence, un pixel de l'image peut correspondre à une source lumineuse élémentaire.

De préférence, les données de calibration peuvent comprendre pour chaque source élémentaire une indication de l'intensité lumineuse émise en fonction d'un courant électrique de charge.

De préférence, les données de calibration peuvent comprendre une indication d'une aberration géométrique d'un faisceau lumineux que le module est apte à émettre.

Suivant l'invention, l'unité de commande peut être configurée pour transmettre au moins une partie desdites données de calibration à un module de commande du véhicule automobile.

Le module d'éclairage peut de préférence comprendre un deuxième élément de mémoire dans lequel des données permettant d'authentifier le module sont enregistrées. De préférence, le module d'éclairage peut comprendre un processeur programmé pour chiffrer et/ou signer des données moyennant une clé cryptographique enregistrée dans ledit élément de mémoire.

Un dispositif lumineux pour un véhicule automobile est proposé qui comprend au moins un module lumineux selon l'aspect précédent de l'invention.

Selon un autre aspect de l'invention, tel que défini dans la revendication 6, un procédé de commande d'une source lumineuse matricielle d'un module d'éclairage pour un véhicule automobile est proposé. Le module d'éclairage est conforme à un aspect de l'invention.

De préférence, l'au moins une partie des données de calibration transmise au module de commande du véhicule automobile peut comprendre des données d'indication d'une aberration géométrique.

Le procédé de commande peut de préférence comprendre une étape de génération d'une consigne d'éclairage par défaut, déterminée en utilisant lesdites données de calibration ainsi que des données relatives au véhicule automobile, et une étape d'enregistrement de la consigne d'éclairage par défaut dans un élément de mémoire du module d'éclairage.

De préférence, la génération de ladite consigne d'éclairage par défaut peut être réalisée par le module de commande du véhicule automobile suite à la réception desdites données de calibration de la part de l'unité de commande du module d'éclairage. La consigne peut ensuite préférentiellement être transmise vers ladite unité de commande qui l'enregistre dans un élément de mémoire.

La consigne par défaut peut de préférence remplacer la consigne d'éclairage reçue à l'étape a) si une défaillance au niveau du module d'éclairage et/ou du module de commande du véhicule automobile est détectée.

De préférence, au moins une partie des données échangées entre le module de commande du véhicule automobile et l'unité de commande du module d'éclairage peut être chiffrée et/ou signée moyennant au moins une clé cryptographique.

De manière préférée, une défaillance au niveau du module d'éclairage et/ou du module de commande du véhicule automobile peut être détectée lorsque le déchiffrage des données n'aboutit pas ou lorsque ladite signature ne peut pas être validée.

Dans un mode de réalisation, un procédé d'appairage entre un module d'éclairage pour véhicule automobile, conforme à un aspect de l'invention, et un module de commande d'un véhicule automobile est proposé. Le procédé est remarquable en ce qu'il comprend les étapes suivantes :
- au niveau de l'unité de commande du module d'éclairage, transmettre les données de calibration stockées dans l'élément de mémoire au module de commande du véhicule automobile ;
- au niveau du module de commande, en utilisant des données relatives au véhicule automobile, comme par exemple l'assiette, la position du module d'éclairage, la position d'autres modules d'éclairage, générer une consigne d'éclairage par défaut et la transmettre à l'unité de commande du module d'éclairage ;
- au niveau de l'unité de commande du module d'éclairage, enregistrer la consigne par défaut dans un élément de mémoire.

De préférence, la consigne par défaut peut comprendre une image correspondant à un éclairage de feu de croisement. De préférence, la consigne par défaut peut comprendre une coupure de feu de croisement.

Selon un autre aspect de l'invention, un programme d'ordinateur comprenant une suite d'instructions est proposé. Lorsque les instructions sont exécutées par un processeur, elles conduisent le processeur à mettre en œuvre le procédé selon un des aspects de l'invention.

Selon un aspect final de l'invention, un support de stockage non transitoire lisible par ordinateur est proposé. Le support stocke un programme d'ordinateur selon un aspect de l'invention.

En utilisant les mesures proposées par la présente invention, il devient possible de proposer un module d'éclairage ainsi qu'un procédé de commande qui permettent de calibrer le comportement lumineux et/ou géométrique des sources lumineuses élémentaires regroupées dans une source lumineuse matricielle d'un module d'éclairage d'un véhicule automobile. Les aspects de l'invention permettent de produire un faisceau lumineux homogène et conforme à une consigne prédéterminée, indépendamment de l'instance de la source lumineuse matricielle implantée dans le module d'éclairage. Pour y arriver, en accord avec des aspects de l'invention il est proposé que les paramètres de calibration soient stockés sur une mémoire fixée au module d'éclairage, lesdits paramètres comprenant par exemple des valeurs de correction de luminosité ou de courant électrique pour chaque pixel d'une source matricielle, ou des corrections de géométrie du faisceau produit par le module lumineux. De la sorte, on assure que les données associées au module lui sont physiquement jointes, notamment au moment de l'appairage du module d'éclairage avec le véhicule automobile. Cela permet d'éviter une étape supplémentaire de paramétrage pouvant susciter des erreurs lors de l'assemblage d'un projecteur de véhicule utilisant le module de d'éclairage. En utilisant les mesures de l'invention, un assemblage ou un changement de module peut être réalisé sans manipulation logicielle : par exemple, il n'y a pas besoin de transférer ou mettre à jour des données relatives au module dans une mémoire du contrôleur du véhicule automobile.

D'autres caractéristiques et avantages de la présente invention seront mieux compris à l'aide de la description des exemples et des dessins parmi lesquels :
- la Fig. 1 est une illustration d'un module lumineux suivant un exemple de réalisation qui n'est pas suivant l'invention,
- la Fig. 2 est une illustration d'un module lumineux en accord avec un mode de réalisation préférentiel de l'invention ;
- la Fig. 3 montre la séquence des étapes principales d'un procédé suivant un exemple de réalisation qui n'est pas suivant l'invention ;
- la Fig. 4 montre la séquence des étapes principales d'un procédé en accord avec un mode de réalisation préférentiel de l'invention.

La description se concentre sur les éléments d'un module d'éclairage pour un véhicule automobile qui sont nécessaires à la compréhension de l'invention. D'autres éléments, qui font de manière connue partie de tels modules, ne seront pas mentionnées ni décrits en détails. Par exemple, la présence et le fonctionnement d'un circuit convertisseur impliqué l'alimentation électrique d'une source lumineuse matricielle, en soi connu, ne sera pas décrit en détails. Il en va de même pour des éléments optiques tels que des lentilles par exemple.

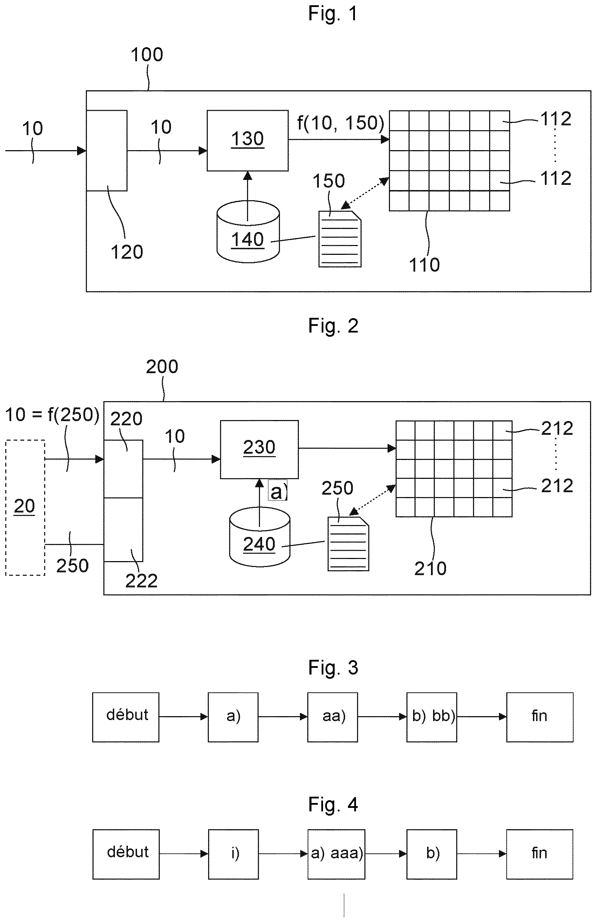

L'illustration de la figure 1 montre un module d'éclairage 100 pour un véhicule automobile selon un exemple de réalisation. Le module comprend une source lumineuse matricielle 110 regroupant une pluralité de sources lumineuses élémentaires 112. Dans l'exemple illustré, il s'agit d'une matrice de LEDs sans pour autant que l'invention ne soit limitée à cet exemple. La source lumineuse matricielle peut également être réalisée par un dispositif à micro-miroirs, pour lequel chaque miroir est adapté à générer un faisceau lumineux élémentaire d'une matrice. Le module comprend une unité de réception de données 120, il s'agit par exemple d'une interface capable de recevoir et décoder des messages sur un bus de données interne au véhicule automobile, tel qu'un bus de type CAN (« Controller Area Network »). L'unité de réception données 120 est apte à recevoir une consigne d'éclairage 10, typiquement déterminée par un module de commande non-illustré du véhicule automobile. La consigne d'allumage peut par exemple comprendre une valeur de luminosité, tel qu'un niveau de gris, encodée sur un nombre prédéterminé de bits et à réaliser par chacune des sources lumineuses élémentaires 112. La consigne d'allumage peut donc être une image digitale, et elle peut en particulier être une trame d'un flux de telles images, constituant un signal vidéo. Une unité de commande 130 est destinée à commander ladite source lumineuse matricielle en fonction de ladite consigne d'éclairage. L'unité de commande peut être reliée à, ou comprendre, un circuit de pilotage de l'alimentation électrique des sources lumineuses élémentaires 112, qui est commandé pour alimenter les sources lumineuses élémentaires de manière à réaliser la consigne 10. Le module 100 comprend en outre un élément de mémoire 140, tel qu'une mémoire de type flash, auquel l'unité de commande 130 est fonctionnellement reliée et possède un accès en lecture, et dans lequel des données de calibration 150 propres à chacune des sources lumineuses élémentaires 112 sont enregistrées. A titre d'exemple les données peuvent comprendre pour chaque source lumineuse élémentaire 112 une valeur indiquant la différence de luminosité par rapport à la luminosité moyenne de la source matricielle 110, possiblement sur une gamme d'intensités de courant de charge. Afin de garantir une intensité lumineuse homogène, l'unité de commande 130 ajuste les valeurs de consigne 10 reçues en y additionnant ou retranchant les différences respectives, avant de commander les sources lumineuses élémentaires en accord avec le résultat. Les données 150 peuvent néanmoins comprendre des paramètres optiques ou géométriques de calibration plus complexes, sans pour autant sortir du cadre de la présente invention. Dans un tel cas, au lieu d'agir uniquement au niveau de chaque source lumineuse ou de chaque pixel de manière individuelle, la correction de la consigne 10 peut avantageusement engendrer une correction au niveau de toute la consigne, i.e. de toute l'image à projeter, ou au niveau d'au moins une partie ou zone de cette image. Par exemple, l'image projetée sans la correction de consigne pourrait présenter une allure courbée concave due à l'optique de projection aux abords de la zone de projection. La réalisation de la consigne précorrigée, qui prend en compte les données de calibration y compris la déformation géométrique infligée par l'optique de projection, résulte dans une image projetée présentant une géométrie plus proche de la géométrie non-courbée désirée. Pour appliquer une correction des aberrations géométriques, il est utile d'appliquer une déformation à toute l'image de consigne 10. Comme celle-ci est discrétisée, cette déformation provoque une dégradation de l'information contenue dans l'image initiale. Il est donc avantageux que l'image de consigne transmise depuis l'unité de commande du véhicule vers l'unité de commande soit d'une résolution supérieure à la résolution de projection du module lumineux. L'unité de commande 130 comprend un élément microcontrôleur ayant une puissance de calcul suffisante pour corriger la consigne 10, ou bien un flux de consignes, en temps réel, en y appliquant les données de calibration 150.

L'illustration de la figure 2 montre un module d'éclairage 200 pour un véhicule automobile selon un mode de réalisation de l'invention. Le module comprend une source lumineuse matricielle 210 regroupant une pluralité de sources lumineuses élémentaires 212. Le module comprend une unité de réception/transmission de données 220,222. L'unité de réception données 220 est apte à recevoir une consigne d'éclairage 10, typiquement déterminée par un module de commande 20 du véhicule automobile. La consigne d'allumage peut par exemple comprendre une valeur de luminosité, tel qu'un niveau de gris, encodée sur un nombre prédéterminé de bits et à réaliser par chacune des sources lumineuses élémentaires 212. Une unité de commande 230 est destinée à commander ladite source lumineuse matricielle en fonction de ladite consigne d'éclairage. Le module 200 comprend en outre un élément de mémoire 240, tel qu'une mémoire de type flash, auquel l'unité de commande 230 est fonctionnellement reliée et possède un accès en lecture, et dans lequel des données de calibration 250 décrites dans le cadre du mode de réalisation précédent, et propres à chacune des sources lumineuses élémentaires 212 sont enregistrées. A titre d'exemple, les données peuvent comprendre pour chaque source lumineuse élémentaire 212 une valeur indiquant la différence de luminosité par rapport à la luminosité moyenne de la source matricielle 210, possiblement sur une gamme d'intensités de courant de charge. Le module d'éclairage illustré est agencé pour transmettre au moins une partie des données de calibration 250, et de préférence l'intégralité de ces données, vers le module de commande 20. Ceci est par exemple réalisé lors d'une phase d'initialisation du module d'éclairage. Afin de garantir une intensité lumineuse homogène, le module de commande 20 prend en compte les valeurs de calibration 250 ainsi reçues pour déterminer l'image de consigne 10. Par exemple, le module de commande 20 ajuste les valeurs de consigne 10 en y additionnant ou retranchant les différences respectives, avant de transmettre le résultat au module d'éclairage 200. Les données 250 peuvent néanmoins comprendre des paramètres optiques ou géométriques de calibration plus complexes, sans pour autant sortir du cadre de la présente invention. Dans ce mode de réalisation l'unité de commande 230 est libérée de la tâche de correction de la consigne, et elle peut être réalisée par un élément microcontrôleur moins onéreux et présentant une moindre puissance de calcul.

La figure 3 montre de manière schématisée le procédé de commande réalisé moyennant l'exemple de réalisation qui vient d'être décrit en rapport avec la figure 1. Lors de l'étape a), la consigne d'éclairage 10 est déterminée par le module de commande du véhicule automobile et transmise au module d'éclairage, ce qui correspond à l'étape a1). A la réception de la consigne 10, l'unité de commande 130 commande la source lumineuse matricielle 110 en corrigeant la consigne 10 moyennant les données de calibration 150 stockées dans l'élément de mémoire 140, ce qui correspond à l'étape b).

La figure 4 montre de manière schématisée le procédé de commande réalisé moyennant le mode de réalisation de l'invention qui vient d'être décrit en rapport avec la figure 2. Lors de l'étape préliminaire i), au moins une partie des données de calibration 250 stockées dans l'élément de mémoire 240 est transmise à partir du module d'éclairage 200 à destination du module de commande 20 du véhicule automobile. Lors de l'étape a), la consigne d'éclairage 10 est déterminée par le module de commande du véhicule automobile et corrigée en fonction des données de calibration 250 reçues, et transmise au module d'éclairage, ce qui correspond à l'étape a2). A l'étape b), l'unité de commande 230 du module d'éclairage 200 commander la source lumineuse matricielle 210 du module d'éclairage en fonction de ladite consigne d'éclairage, qui dépend désormais déjà des données de calibration 250 stockées dans l'élément de mémoire 240.

L'échange des données entre le module lumineux 200 et le module de commande 20 du véhicule automobile à l'appairage des deux modules permet d'autres applications intéressantes. Notamment, il est proposé de combiner des données relatives au véhicule, comme par exemple des paramètres d'orientation, de position, ou d'assiette du véhicule, ou encore des informations par rapport à des flux lumineux émis par d'autres projecteurs du véhicule, qui ne sont a priori disponibles uniquement au niveau du module de commande 20, avec les données de calibration 250, disponibles au niveau du module d'éclairage 200 et spécifiques à la source matricielle 210 embarquée dans celui-ci. Ces informations sont utilisées, typiquement mais de manière non-limitative par le module de commande 20 du véhicule automobile pour générer une consigne ou image par défaut. En effet, le module de commande du véhicule automobile présente en général une capacité de calcul accrue par rapport à l'unité de commande 230 du module d'éclairage. Alternativement, ce calcul peut être réalisé par l'unité de commande 230 du module d'éclairage après un échange correspondant des données requise pour ce calcul entre l'unité de commande du véhicule automobile d'une part, et l'unité de commande du module d'éclairage d'autre part. Une image par défaut est une image qui est projetée par le module dans lorsqu'un défaut ou une panne est détecté. Ainsi, le module peut de préférence comprendre un circuit électronique de détection d'erreur, ou un microprocesseur programmé à cet effet par un programme informatique approprié. Le circuit de détection d'erreur est configuré pour détecter par exemple que les données reçues par le module de commande du véhicule automobile sont incohérentes, ou que la connexion entre le module de commande du véhicule automobile et le module d'éclaire 200 n'est plus fiable. Suite à cette détection d'erreur, l'image par défaut est projetée à la place de l'image de consigne, dans le but d'éviter l'éblouissement potentiel d'autres usagers de la route. L'image par défaut est générée pour prendre en compte les spécificités de la source lumineuse matricielle 210 d'une part, et du véhicule qu'elle équipe de l'autre part. Ainsi l'image par défaut peut par exemple être générée de manière précise et automatique pour chaque véhicule automobile et chaque module d'éclairage qui l'équipe. De préférence, l'image par défaut résultante de ce procédé est transmise vers le module d'éclairage, qui la stocke de manière permanente dans un élément de mémoire dédié. En cas de défaillance de la communication entre le module de commande 20 du véhicule automobile et le module d'éclairage 200, la consigne par défaut sert alors de commande à la source lumineuse matricielle. L'image ou consigne par défaut peut par exemple correspondre à un éclairage de feu de croisement. En particulier, cette image peut correspondre à une coupure de feu de croisement. En effet la coupure doit être bien définie pour satisfaire la réglementation en vigueur.

L'échange de données entre le module de commande 20 du véhicule automobile et le module d'éclairage 200 précédemment définis et tel qu'il est illustré par la figure 4 permet également d'ajouter une fonction d'authentification entre les deux modules 20 et 200 respectivement.

Il est à noter que cette fonction d'authentification peut également être mise en œuvre indépendamment de la fonction de calibrage et/ou de l'échange de données de calibration/assiette et sans la présence de l'élément de mémoire 240 au niveau du module d'éclairage 200.

La fonction d'authentification peut par exemple comprendre l'échange de clés cryptographiques publiques entre les deux modules en question, permettant ainsi la vérification par l'un et l'autre de l'authenticité de données signées moyennant les clés cryptographique privées correspondantes. Alternativement ou cumulativement, l'unité de commande 230 du module d'éclairage 200 envoie un accusé de réception vers le module de commande 20 pour un paquet de données reçu, l'accusé de réception comportant une partie permettant d'authentifier le microcontrôleur. Le paquet de données peut par exemple contenir des données de calibration, et/ou des données d'images par défaut et/ou des données pour générer une image par défaut et/ou tout ou partie d'une image et/ou d'un groupe d'images, et/ou un paquet d'un flux vidéo compressé. Dans un mode de réalisation préférentiel, cette authentification n'est pas réalisée sur tous les paquets. De la sorte, la charge de calcul correspondante est allégée et lissée dans le temps. Encore alternativement, la fonction d'authentification peut comprendre l'envoi, du module de commande 20 du véhicule automobile vers l'unité de commande 230 du module d'éclairage, d'un entête pour un paquet de données envoyé, l'entête comportant une partie permettant d'authentifier le module de commande 20, le paquet de données étant du même type que précédemment défini. Avantageusement cette authentification n'est pas réalisée sur tous les paquets. De la sorte, la charge de calcul correspondante est allégée et lissée dans le temps.

Afin de réaliser la fonction d'authentification, le module d'éclairage 200 ainsi que le module de commande 20 du véhicule automobile comprennent des moyens de calcul pour générer l'entête respectivement l'accusé de réception servant à l'authentification. De préférence, la génération est faite en fonction
- d'un temps ou d'une date, pouvant être exprimé en une unité de temps quelconque, par exemple en millisecondes, ou
- d'un compteur comptant des échanges ou des cycles de calcul, ou
- d'un autre élément qui évolue avec le nombre d'échanges, pouvant être réinitialisé lorsque qu'il dépasse une taille prédéfinie.

Dans le cas où l'authentification entre le contrôleur et le microcontrôleur échoue, la fonction d'éclairage peut être mise dans un mode de défaillance de la communication. Avantageusement, le mode de défaillance n'est activé que lorsque des échecs de l'authentification sont répétés, ce qui permet d'éviter d'activer le mode de défaillance si la liaison a été perturbée, par exemple par des perturbations électromagnétiques passagères, ce qui est en particulier avantageux dans le cas d'une fonction d'authentification utilisant des entêtes ou des accusés de réception.

Dans le cas où l'unité de commande 230 comprend un calculateur, il peut implémenter une fonction de chiffrage des échanges de données, dans laquelle des données chiffrées par le module de commande 20 du véhicule automobile sont déchiffrées par le calculateur. Avantageusement, le calculateur dispose d'une méthode pour déterminer si le flux n'est pas décodé correctement. Si le flux n'est pas décodé correctement, le calculateur peut passer dans un mode de défaillance de la communication. Le mode de défaillance de la communication peut impliquer les procédures suivantes, prises seules ou en combinaison :
- l'arrêt de la fonction d'éclairage ou la projection par le module d'éclairage d'une image par défaut,
- la génération par le module de commande 20 d'un signal de défaillance émis vers un système central de gestion de l'automobile,
- le passage du calculateur dans un mode d'authentification où le calculateur continue à lancer une procédure d'authentification auprès du calculateur du module de commande 20 (ou vice-versa). Dans le mode d'authentification, l'envoi des paquets de données peut être interrompu.

Il va de soi que le mode de réalisation décrit ne limite pas l'étendue de la protection de l'invention. En faisant recours à la description qui vient d'être donnée, d'autres modes de réalisation sont envisageables sans pour autant sortir du cadre de la présente invention.

L'étendue de la protection est déterminée par les revendications.

## Revendications

1. Module d'éclairage (200) pour un véhicule automobile comprenant une source lumineuse matricielle (210) regroupant une pluralité de sources lumineuses élémentaires (212), une unité de réception de données (220) pour recevoir une consigne d'éclairage (10), et une unité de commande (230) destinée à commander ladite source lumineuse matricielle en fonction de ladite consigne d'éclairage, le module comprenant un élément de mémoire (240) auquel l'unité de commande (230) a un accès en lecture, et dans lequel des données de calibration (250) propres à chacune des sources lumineuses élémentaires (212) sont enregistrées, **caractérisé en ce que** l'unité de commande est configurée pour transmettre au moins une partie desdites données de calibration (250) à un module de commande (20) du véhicule automobile.

2. Module d'éclairage selon la revendication précédente, **caractérisé en ce que** ladite consigne d'éclairage (10) comprend une consigne élémentaire par source lumineuse élémentaires (212).

3. Module d'éclairage selon la revendication précédente, **caractérisé en ce que** ladite consigne d'éclairage (10) comprend une image, dont au moins un pixel correspond à une source lumineuse élémentaire (212).

4. Module d'éclairage selon l'une des revendications précédentes, **caractérisé en ce que** les données de calibration (250) comprennent pour chaque source élémentaire (212) une indication de l'intensité lumineuse émise en fonction d'un courant électrique de charge et/ou une indication d'une aberration géométrique d'un faisceau lumineux qu'elle est apte à émettre

5. Module d'éclairage (200) selon l'une des revendications précédentes , **caractérisé en ce que** le module comprend un deuxième élément de mémoire dans lequel des données permettant d'authentifier le module sont enregistrées.

6. Procédé de commande d'une source lumineuse matricielle d'un module d'éclairage (200) pour un véhicule automobile conforme à une des revendications 1 à 7, **caractérisé en ce que** le procédé comprend une étape préliminaire de transmission, au niveau de l'unité de commande (230) du module d'éclairage, d'au moins une partie de données de calibration (250) stockées dans un élément de mémoire (240), à un module de commande (20) du véhicule automobile relié à l'unité de commande (230) par un canal de communication, et **en ce que** le procédé comprend en outre les étapes suivantes :
a) au niveau d'un module de commande (20) du véhicule automobile, déterminer une consigne d'éclairage (10), corriger la consigne déterminée en utilisant les données de calibration reçues, et transmettre ladite consigne d'éclairage corrigée (10) à l'unité de commande (230) du module d'éclairage ;
b) au niveau de l'unité de commande (230) du module d'éclairage, commander la source lumineuse matricielle (210) du module d'éclairage en fonction de ladite consigne d'éclairage corrigée .

7. Procédé de commande selon la revendication 6, **caractérisé en ce qu'**il comprend une étape de génération d'une consigne d'éclairage par défaut, déterminée en utilisant lesdites données de calibration (250) ainsi que des données relatives au véhicule automobile, et une étape d'enregistrement de la consigne d'éclairage par défaut dans un élément de mémoire du module d'éclairage.

8. Procédé de commande selon la revendication 7, **caractérisé en ce que** la génération de ladite consigne d'éclairage par défaut est réalisée par le module de commande (20) du véhicule automobile suite à la réception desdites données de calibration (250) de la part de l'unité de commande (230) du module d'éclairage, et **en ce que** la consigne est ensuite transmise vers ladite unité de commande (230) qui l'enregistre dans un élément de mémoire.

9. Procédé de commande selon une des revendications 7 et 8, **caractérisé en ce que** la consigne par défaut remplace la consigne d'éclairage (10) reçue à l'étape a) si une défaillance au niveau du module d'éclairage (200) et/ou du module de commande (20) du véhicule automobile est détectée.

10. Procédé de commande selon une des revendications 6 à 9, **caractérisé en ce qu'**au moins une partie des données échangées entre le module de commande (20) du véhicule automobile et l'unité de commande (230) du module d'éclairage (200) est chiffrée et/ou signée moyennant au moins une clé cryptographique.

11. Procédé de commande selon la revendication 10, **caractérisé en ce qu'**une défaillance au niveau du module d'éclairage (200) et/ou du module de commande (20) du véhicule automobile est détectée lorsque le déchiffrage des données n'aboutit pas ou lorsque ladite signature ne peut pas être validée.

## Patentansprüche

1. Beleuchtungsmodul (200) für ein Kraftfahrzeug, beinhaltend eine Matrixlichtquelle (210), die eine Vielzahl von elementaren Lichtquellen (212) umfasst, eine Datenempfangseinheit (220) zum Empfangen eines Beleuchtungsbefehls (10) und eine Steuereinheit (230), die dazu bestimmt ist, die Matrixlichtquelle in Abhängigkeit von dem Beleuchtungsbefehl zu steuern, wobei das Modul ein Speicherelement (240) beinhaltet, auf das die Steuereinheit (230) einen Lesezugriff hat und in dem Kalibrierdaten (250) für jede einzelne der elementaren Lichtquellen (212) aufgezeichnet sind, **dadurch gekennzeichnet, dass** die Steuereinheit dazu konfiguriert ist, mindestens einen Teil der Kalibrierdaten (250) an ein Steuermodul (20) des Kraftfahrzeugs zu übertragen.

2. Beleuchtungsmodul nach dem vorhergehenden Anspruch, **dadurch gekennzeichnet, dass** der Beleuchtungsbefehl (10) einen elementaren Befehl pro elementarer Lichtquelle (212) beinhaltet.

3. Beleuchtungsmodul nach dem vorhergehenden Anspruch, **dadurch gekennzeichnet, dass** der Beleuchtungsbefehl (10) ein Bild beinhaltet, von dem mindestens ein Pixel einer elementaren Lichtquelle (212) entspricht.

4. Beleuchtungsmodul nach einem der vorhergehenden Ansprüche, **dadurch gekennzeichnet, dass** die Kalibrierdaten (250) für jede elementare Quelle (212) eine Angabe über die Lichtstärke, die in Abhängigkeit von einem elektrischen Laststrom emittiert wird, und/oder eine Angabe über eine geometrische Aberration eines Lichtstrahls, den sie emittieren kann, beinhalten.

5. Beleuchtungsmodul (200) nach einem der vorhergehenden Ansprüche, **dadurch gekennzeichnet, dass** das Modul ein zweites Speicherelement beinhaltet, in dem Daten aufgezeichnet sind, die ein Authentifizieren des Moduls gestatten.

6. Verfahren zur Steuerung einer Matrixlichtquelle eines Beleuchtungsmoduls (200) für ein Kraftfahrzeug nach einem der Ansprüche 1 bis 7, **dadurch gekennzeichnet, dass** das Verfahren einen Vorabschritt des Übertragens mindestens eines Teils von Kalibrierdaten (250), die in einem Speicherelement (240) gespeichert sind, von der Steuereinheit (230) des Beleuchtungsmoduls an ein Steuermodul (20) des Kraftfahrzeugs, das über einen Kommunikationskanal mit der Steuereinheit (230) verbunden ist, beinhaltet und dass das Verfahren ferner die folgenden Schritte beinhaltet:
a) in dem Steuermodul (20) des Kraftfahrzeugs, Bestimmen eines Beleuchtungsbefehls (10), Korrigieren des bestimmten Befehls unter Verwendung der empfangenen Kalibrierdaten und Übertragen des korrigierten Beleuchtungsbefehls (10) an die Steuereinheit (230) des Beleuchtungsmoduls;
b) in der Steuereinheit (230) des Beleuchtungsmoduls, Steuern der Matrixlichtquelle (210) des Beleuchtungsmoduls in Abhängigkeit von dem korrigierten Beleuchtungsbefehl.

7. Steuerverfahren nach Anspruch 6, **dadurch gekennzeichnet, dass** es einen Schritt des Erzeugens eines Standardbeleuchtungsbefehls, der unter Verwendung der Kalibrierdaten (250) sowie von Daten über das Kraftfahrzeug bestimmt wird, und einen Schritt des Aufzeichnens des Standardbeleuchtungsbefehls in einem Speicherelement des Beleuchtungsmoduls beinhaltet.

8. Steuerverfahren nach Anspruch 7, **dadurch gekennzeichnet, dass** das Erzeugen des Standardbeleuchtungsbefehls von dem Steuermodul (20) des Kraftfahrzeugs im Anschluss an den Empfang der Kalibrierdaten (250) von der Steuereinheit (230) des Beleuchtungsmoduls ausgeführt wird und dass der Befehl anschließend an die Steuereinheit (230) übertragen wird, welche diesen in einem Speicherelement speichert.

9. Steuerverfahren nach einem der Ansprüche 7 und 8, **dadurch gekennzeichnet, dass** der Standardbefehl den in Schritt a) empfangenen Beleuchtungsbefehl (10) ersetzt, wenn ein Fehler an dem Beleuchtungsmodul (200) und/oder dem Steuermodul (20) des Kraftfahrzeugs detektiert wird.

10. Steuerverfahren nach einem der Ansprüche 6 bis 9, **dadurch gekennzeichnet, dass** mindestens ein Teil der zwischen dem Steuermodul (20) des Kraftfahrzeugs und der Steuereinheit (230) des Beleuchtungsmoduls (200) ausgetauschten Daten mittels mindestens eines kryptographischen Schlüssels verschlüsselt und/oder signiert ist.

11. Steuerverfahren nach Anspruch 10, **dadurch gekennzeichnet, dass** ein Fehler an dem Beleuchtungsmodul (200) und/oder dem Steuermodul (20) des Kraftfahrzeugs detektiert wird, wenn die Entschlüsselung der Daten nicht erfolgreich ist oder wenn die Signatur nicht validiert werden kann.

## Claims

1. A lighting module (200) for a motor vehicle comprising a matrix light source (210) grouping together a plurality of elementary light sources (212), a data reception unit (220) for receiving a lighting setpoint (10), and a control unit (230) intended to control said matrix light source according to said lighting setpoint, the module comprising a memory element (240) to which the control unit (230) has read access, and in which calibration data (250) specific to each of the elementary light sources (212) are stored, **characterized in that** the control unit is configured to transmit at least some of said calibration data (250) to a control module (20) of the motor vehicle.

2. The lighting module as claimed in the preceding claim, **characterized in that** said lighting setpoint (10) comprises an elementary setpoint per elementary light source (212).

3. The lighting module as claimed in the preceding claim, **characterized in that** said lighting setpoint (10) comprises an image, of which at least one pixel corresponds to an elementary light source (212).

4. The lighting module as claimed in one of the preceding claims, **characterized in that** the calibration data (250) comprise, for each elementary source (212), an indication of the light intensity emitted as a function of an electric load current and/or an indication of a geometric aberration of a light beam that it is capable of emitting.

5. The lighting module (200) as claimed in one of the preceding claims, **characterized in that** the module comprises a second memory element in which data allowing the module to be authenticated are stored.

6. A method for controlling a matrix light source of a lighting module (100, 200) for a motor vehicle as claimed in one of claims 1 to 7, **characterized in that** the method comprises a preliminary transmission step, at the control unit (230) for the lighting module, at least some of the calibration data (250) stored in the memory element (240) to a control module (20) of the motor vehicle connected to the control module by a communication channel, and **in that** the method further comprise the following steps:
a) at a control module (20) of the motor vehicle, determining a lighting setpoint (10), correcting the setpoint by using the calibration data received, and transmit said corrected lighting setpoint (10) to the control unit (230) of the light module;
b) at the control unit (230) for the lighting module, controlling the matrix light source (210) of the lighting module according to said corrected lighting setpoint.

7. The control method as claimed in claim 6, **characterized in that** it comprises a step of generating a default lighting setpoint, determined by using said calibration data (250) as well as data relating to the motor vehicle, and a step of storing the default lighting setpoint in a memory element of the lighting module.

8. The control method as claimed in claim 7, **characterized in that** said default lighting setpoint is generated by the control module (20) of the motor vehicle following the reception of said calibration data (250) from the control unit (230) for the lighting module, and **in that** the setpoint is then transmitted to said control unit (230) which stores it in a memory element.

9. The control method as claimed in either of claims 7 and 8, **characterized in that** the default setpoint replaces the lighting setpoint (10) received in step a) if a failure at the lighting module (200) and/or at the control module (20) of the motor vehicle is detected.

10. The control method as claimed in one of claims 6 to 9, **characterized in that** at least some of the data exchanged between the control module (20) of the motor vehicle and the control unit (230) for the lighting module (200) are encrypted and/or signed by means of at least one cryptographic key.

11. The control method as claimed in claim 10, **characterized in that** a failure at the lighting module (200) and/or at the control module (20) of the motor vehicle is detected when the decryption of the data is unsuccessful or when said signature cannot be validated.
